**Europäisches Patentamt**

**European Patent Office**

**Office européen des brevets**

(19)

(11) **EP 1 258 741 A2**

(12) **EUROPÄISCHE PATENTANMELDUNG**

(43) Veröffentlichungstag:
**20.11.2002 Patentblatt 2002/47**

(51) Int Cl.⁷: $G01W\ 1/06$, $A01G\ 7/00$

(21) Anmeldenummer: **02009342.3**

(22) Anmeldetag: **03.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **16.05.2001 DE 10124042**

(71) Anmelder: **BAYER AG**
**51368 Leverkusen (DE)**

(72) Erfinder:
• **Wolf, Peter, Dr.**
  **94330 Oberpiebing (DE)**
• **Verreet, Joseph-Alexander, Prof. Dr.**
  **24118 Kiel (DE)**

(54) **Verfahren zum Bestimmen der Notwendigkeit von Fungizidbehandlung bei Rübenpflanzen**

(57) Nach einem neuen Verfahren lässt sich der Zeitpunkt, zu dem Fungizidbehandlungen bei Rübenpflanzen notwendig sind, dadurch bestimmen, dass man von Beginn des Reihenschlusses an die Temperatur, die relative Luftfeuchtigkeit und die Niederschlagsmenge im Anbaugebiet misst und aus den gewonnen Daten mit Hilfe der in der Beschreibung angegebenen Gleichungen den kumulierten Tagesinfektionswert berechnet und nach Erreichen eines Schwellenwertes den visuell ermittelten tatsächlichen Befall dazu in Korrelation bringt.

EP 1 258 741 A2

**Beschreibung**

Die vorliegende Erfindung betrifft ein neues Verfahren zum Bestimmen der Notwendigkeit und des Zeitpunktes, von dem an Fungizidbehandlungen bei Rübenpflanzen vorgenommen werden sollten, um einen hohen Ernteertrag zu sichern.

Es sind bereits mehrere Methoden bekannt, mit deren Hilfe die Wahrscheinlichkeit eines epidemieartigen Pilzbefalls bei Rübenpflanzen im voraus ermittelt werden kann.

So wurde vorgeschlagen, auf Basis von Witterungsparametern die Wahrscheinlichkeit zu bestimmen, mit der Rübenpflanzen in starkem Maße von Cercospora-Arten infiziert werden (vgl. Forschung und Beratung: Reihe C: Wiss. Ber. über Land- und Ernährungswissenschaft 1996, 50, 15.1-15.5). Nachteilig an diesem Verfahren ist, dass Witterungsparameter nur unzulänglich berücksichtigt werden, so dass der Prognoseansatz den speziellen Anforderungen der Rübenkulturen nicht gerecht wird. Die Methode ist daher ungenau und erlaubt keine zuverlässigen Aussagen darüber, wann mit starkem Pilzbefall zu rechnen ist. Ungünstig ist vor allem, dass der genaue Zeitpunkt nicht ableitbar ist, zu dem eine Fungizidbehandlung sinnvollerweise erfolgen sollte.

Weiterhin wurde schon ein mathematisches Modell beschrieben, welches es gestattet, die Wahrscheinlichkeit von epidemieartigem Pilzbefall bei Rübenpflanzen vorauszusagen (vgl. Bulletin OEPP EPPO Bulletin 1991, 21, 527-531). In diesem Modell werden als Parameter die Temperatur und die relative Luftfeuchtigkeit separat berücksichtigt. Dadurch ist es zwar möglich, die Wahrscheinlichkeit eines kommenden, zu starken Schäden führenden Pilzbefalls anzugeben. Genaue Voraussagen über den Beginn einer Epidemie und folglich des Zeitpunktes, von dem an eine Fungizidbehandlung einsetzen sollte, können aber auch mit diesem Verfahren nicht getroffen werden.

Es wurde nun ein neues Verfahren zum Bestimmen der Notwendigkeit von Fungizidbehandlungen bei Rübenpflanzen gefunden, das dadurch gekennzeichnet ist, dass man

A) in einem ersten Schritt vom Reihenschluss an die Temperatur, die relative Luftfeuchtigkeit und die tägliche Niederschlagsmenge im Anbaugebiet misst und daraus den kumulierten Tagesinfektionswert (*kTIW*) für einen ausgewählten Erreger von Pilzkrankheiten nach folgender Formel berechnet

$$kTIW = \sum_{i=1}^{n} TIW \ (t_i) \qquad \text{(Gl. 1)}$$

worin

| | |
|---|---|
| *kTIW*: | kumulierter Tagesinfektionswert |
| *t_i*: | i-ter Tag der Messwert-Erfassung |
| *n*: | Zahl der hintereinander liegenden Tage der Messwert-Erfassung ab Reihenschluss |
| *TIW (t_i):* | Tagesinfektionswert am Tag $t_i$ |

wobei sich der jeweilige Tagesinfektionswert *TIW* wiederum nach folgender Formel berechnet

$$TIW (t_k) = \frac{1}{24} \cdot \sum_{h=1}^{24} T_h \ (k) \cdot F_h \ (k) \qquad \text{(Gl. 2)}$$

worin

| | |
|---|---|
| *h*: | Zeit in Stunden |
| *T_h (k)*: | Temperaturfaktor in der h-ten Stunde am k-ten Tag |
| *F_h (k):* | Feuchtigkeitsfaktor in der h-ten Stunde am k-ten Tag |
| *t_k*: | k-ter Tag der Meßwerterfassung |

wobei sich der Temperaturfaktor $T_h(k)$ nach folgender Formel berechnet

$$T_h\ (k) = \frac{IZ\ opt}{IZ\ (x\ (h))}$$

worin $\qquad$ (Gl.3)

$IZ_{opt}$: $\qquad$ Inkubationszeit (IZ) bei optimaler Temperatur in Tagen
$IZ_x$: $\qquad$ Inkubationszeit (IZ) bei Temperatur x in Tagen
$x\ (h)$: $\qquad$ Temperatur zur Stunde h

und

$$F_h\ (k) = \begin{cases} 1 & \text{falls relative Luftfeuchtigkeit} >90\ \%\ \text{oder} \\ & \text{Niederschlagsmenge} \geq 0,1\ \text{mm/h} \\ 0 & \text{sonst} \end{cases}$$

und wobei sich $IZ$ aus folgender Formel ergibt

$$IZ\ (x) = IZ_{opt} + a \cdot exp\ [b \cdot (x - c)] \qquad \text{(Gl.4)}$$

worin

$IZ_{opt}$: $\qquad$ Inkubationszeit bei optimaler Temperatur in Tagen
$x$: $\qquad$ Temperatur in °C
$a,\ b,\ c$: $\qquad$ Faktoren

und

B) in einem zweiten Schritt, wenn *kTIW* einen für den Erreger und die Rübenpflanzen charakteristischen Wert erreicht oder überschritten hat, den tatsächlichen Befall mit dem Erreger bestimmt, indem man wöchentlich jeweils 100 Blätter der Pflanzen nach Infektionshinweisen untersucht, und

C) in einem dritten Schritt ermittelt, wann wenigstens 5 von 100 Blättern infiziert sind.

Unter Reihenschluss wird im vorliegenden Fall der Zeitpunkt verstanden, zu dem sich 90 % der Rübenpflanzen zweier benachbarter Reihen mit mindestens einem Blatt berühren oder überlappen. Dabei wird ein durchschnittlicher Reihenabstand zwischen 45 und 50 cm angenommen.

Es ist als ausgesprochen überraschend zu bezeichnen, dass sich nach dem erfindungsgemäßen Verfahren durch die Wahl des Reihenschlusses als Ausgangspunkt für die Messung von Witterungsparametern der Epidemiebeginn bei Rübenpflanzen sehr genau ermitteln und so die Notwendigkeit von Fungizidbehandlungen bestimmen lässt.

Das erfindungsgemäße Verfahren zeichnet sich gegenüber entsprechenden vorbekannten Methoden durch eine Reihe von Vorteilen aus. So ist es problemlos anwendbar, weil es außer der Bestimmung von einfach messbaren Witterungsparametern nur noch eine visuelle Beobachtung des tatsächlichen Pilzbefalls erfordert. Die zunächst aufwendig erscheinenden Rechenoperationen lassen sich mit Hilfe von Computerprogrammen auf elektronischem Wege schnell durchführen. Von besonderem Vorteil ist weiterhin, dass sich ein Epidemiebeginn mit hoher Genauigkeit festlegen lässt. Dadurch ist es möglich, notwendige Fungizidbehandlungen jeweils exakt zum optimalen Zeitpunkt durchzuführen.

Bei der Anwendung des erfindungsgemäßen Verfahrens muss zunächst der Reihenschluss im Rübenbestand abgewartet werden. Dieser erfolgt in Mitteleuropa im Allgemeinen zwischen Ende Mai und Ende Juni. In diesen Breiten ist es daher unter Akzeptanz einer tolerierbaren Fehlerquote möglich, den 1. Juni als Beginn der Prognosephase zu wählen.

Im ersten Schritt des erfindungsgemäßen Verfahrens werden die Temperatur, die relative Luftfeuchtigkeit und die tägliche Niederschlagsmenge im Anbaugebiet gemessen. Es ist aber auch möglich, die von der nächstgelegenen Wetterstation erhältlichen Daten zu verwenden, ohne dass entscheidende Abweichungen im Ergebnis zu befürchten sind.

Das erfindungsgemäße Verfahren ist geeignet, um die epidemische Entwicklung der üblichen Pilzinfektionen bei Rübenpflanzen zu erfassen. Unter Rübenpflanzen sind hierbei vorzugsweise Zuckerrüben und Runkelrüben zu verstehen.

Als Erreger pilzlicher Krankheiten kommen vorzugsweise Arten von *Cercospora, Ramularia, Erysiphe* und *Uromyces,* besonders bevorzugt *Cercospora beticola, Ramularia beticola, Erysiphe betae* und *Uromyces betae* infrage. Ganz besonders bevorzugt lässt sich mit Hilfe des erfindungsgemäßen Verfahrens die Entwicklung des Befalls von Zuckerrüben durch *Cercospora beticola* bestimmen und damit der genaue Termin zur Behandlung gegen diesen Erreger festlegen.

Unter dem in Gleichung 1 aufgeführten kumulierten Tagesinfektionswert *kTIW* ist im vorliegenden Fall die Summe der einzelnen Tagesinfektionswerte *TIW* beginnend mit dem ersten Tag *i* der Messwert-Erfassung zu verstehen. Der kumulierte Tagesinfektionswert *kTIW* stellt ein Maß für die Infektionswahrscheinlichkeit dar. Die Messwerterfassung beginnt mit dem Tag des Reihenschlusses. Dieses ist der Tag 1, der den Startzeitpunkt für die Anwendung des erfindungsgemäßen Verfahrens markiert.

Unter dem Tagesinfektionswert *TIW* ist im vorliegenden Fall ein Tagesmittelwert als Maß für die Wahrscheinlichkeit der Auslösung einer Infektion zu verstehen. Dieser Tagesmittelwert wird aus 24 Messpunkten ermittelt, die stündlich erfasst werden. Einflussgrößen auf diesen Wert sind die Temperatur und die relative Luftfeuchtigkeit bzw. die Niederschlagsmenge. Die Temperatur wirkt sich quantitativ aus, d.h. bei höherer Temperatur sinkt die Inkubationszeit des Erregers und die Infektionswahrscheinlichkeit nimmt zu. Diese Tatsache wird durch den quantitativen Temperaturfaktor $T_h (k)$ in Gleichung 2 erfasst. Feuchte hingegen wirkt sich qualitativ aus. Bei einer relativen Luftfeuchtigkeit von ≥ 95 % bzw. bei Vorliegen von Blattnässe setzt die Keimung des Erregers ein. Dies findet schließlich Ausdruck in dem qualitativen Feuchtefaktor $T_h (k)$ in Gleichung 2.

Der Temperaturfaktor $T_h (k)$ wird nach Gleichung 3 berechnet. Die Temperatur wirkt sich zwar quantitativ auf die Infektionswahrscheinlichkeit aus, aber nicht quantitativ linear. Vielmehr kann der Zusammenhang zwischen Inkubationszeit *IZ* und der Temperatur durch eine Exponentialfunktion beschrieben werden (siehe Gleichung 4). Mit steigender Temperatur x wird ein Zeitpunkt erreicht, von dem an die Inkubationszeit ein Minimum $IZ_{opt}$ erreicht. Für mitteleuropäische Verhältnisse wird von einem Temperaturbereich bis 35°C ausgegangen. Bei Anwendung des Verfahrens in anderen Klimazonen muss der Temperaturbereich angepasst werden. So muss in kälteren Klimazonen ein niedrigerer Temperaturbereich und in wärmeren Klimazonen ein höherer Temperaturbereich gewählt werden.

Geht man von einem Befall von Zuckerrüben durch *Cercospora beticola* aus, so ergeben sich für Gleichung 4 folgende Faktoren:

$$IZ_{opt} = 7$$

$$a = 26$$

$$b = -0{,}35$$

$$c = 10$$

Der Feuchtefaktor $F_h (k)$ stellt ein Maß dafür dar, ob ausreichend Feuchte vorhanden ist, um die Keimung eines Erregers auszulösen. Dieser Faktor kann daher zwei Werte annehmen: 1 oder 0 (Feuchteanspruch erfüllt/nicht erfüllt). Wie oben ausgeführt setzt ab einer relativen Luftfeuchtigkeit von ≥ 95 % bzw. bei Vorliegen von Blattnässe die Keimung des Erregers ein. Im Freiland ist jedoch trotz Vorliegen von Blattnässe eine Variation der Luftfeuchte zwischen 50 % und 100 % möglich. Da bei Vorliegen von Blattnässe die Luftfeuchtigkeit mit 75 %iger Wahrscheinlichkeit > 90 % liegt, wird ab diesem Wert der Faktor $F_h (k)$ auf 1 gesetzt, ebenso wenn der Niederschlagswert unabhängig von der tatsächlichen Luftfeuchte ≥ 0,1 mm/h beträgt. In allen anderen Fällen ist $F_h (k)$ gleich 0.

Erreicht oder überschreitet der im ersten Schritt des erfindungsgemäßen Verfahrens errechnete kumulierte Tagesinfektionswert (*kTIW*) einen charakteristischen Wert - den sogenannten Schwellenwert -, so wird der zweite Schritt des erfindungsgemäßen Verfahrens durchgeführt, indem man wöchentlich jeweils 100 Blätter der Rübenpflanzen im Anbaugebiet visuell auf Pilzbefall hin untersucht. Ist der Schwellenwert 7 oder größer, so ist der Ausbruch eines epidemieartigen Befalls nicht mehr auszuschließen. Dieser Schwellenwert ist abhängig von der untersuchten Rübenpflanzensorte und dem untersuchten Erreger. Bei dem Befall unterschiedlicher Zuckerrübensorten durch *Cercospora beticola* liegt der Schwellenwert zwischen 7 für hoch anfällige und 12 für teilresistente Sorten.

Ist also ein Schwellenwert von 7 erreicht oder überschritten und wird im zweiten und dritten Schritt des erfindungsgemäßen Verfahrens ermittelt, dass wenigstens 5 von 100 Blättern befallen sind, so ist die Notwendigkeit von Fungizidbehandlungen gegeben.

Wird jedoch ein Überschreiten des Schwellenwertes und/oder Befall von wenigstens 5 von 100 Blättern erst zu einem Zeitpunkt festgestellt, der 6 Wochen oder noch kürzer vor der Ernte liegt, so erübrigt sich eine Fungizidbehandlung, weil der zu erwartende Verlust geringer ist als der für eine Fungizidbehandlung erforderliche Aufwand.

Bei Anwendung des erfindungsgemäßen Verfahrens in Klimazonen, die sich von derjenigen in Mitteleuropa unterscheiden, muss der kumulierte Tagesinfektionswert *kTIW* als Minimalkriterium für den Beginn der Epidemie angepasst werden. Dieser Wert ist nicht nur von den klimatischen Verhältnissen abhängig, sondern auch vom Anbauverfahren, den Kulturbedingungen und der Resistenzempfindlichkeit der jeweiligen Rübensorte.

Wird nach dem erfindungsgemäßen Verfahren die Notwendigkeit einer Fungizidbehandlung ermittelt, so empfiehlt sich die Applikation entsprechender Mittel zur Pilzbekämpfung. Dabei richtet sich die Anzahl der Applikationen und die Aufwandmenge an fungizidem Mittel nach dem jeweiligen Erreger und den eingesetzten Wirkstoffen. Die Anwendung der Fungizide erfolgt nach den üblichen Methoden.

Das erfindungsgemäße Verfahren wird durch das folgende Beispiel veranschaulicht.

## Beispiel 1

Bestimmung der Notwendigkeit von Fungizidbehandlungen bei Zuckerrüben

In einem Zuckerrübenfeld in Süddeutschland wird vom Tag des Reihenschlusses an stündlich

- die Temperatur,
- die relative Luftfeuchtigkeit und
- die Niederschlagsmenge

gemessen.

Durch Einsetzen der Messdaten in die zuvor angegebenen Gleichungen werden die Tagesinfektionswerte (*TIW*) berechnet. Aus diesen wiederum ergibt sich unter Verwendung von Gleichung 1 der kumulierte Tagesinfektionswert (*kTIW*).

Die Ergebnisse sind in der folgenden Tabelle zusammengefasst.

## Tabelle 1

Bestimmung der Notwendigkeit von Fungizid-Behandlungen bei Zuckerrüben

| Termin | | Witterungsdaten | | | Infektionswahrscheinlichkeit Stunde (h) | | | | | | Infektionswahrschein-lichkeit Tag (k) | |
|---|---|---|---|---|---|---|---|---|---|---|---|---|
| | | | | | Kalkulation Faktor Feuchte | | | Kalkulation Faktor Temperatur | | Infektionswahr-scheinlichkeit | | |
| Tag | Stunde | Tempe-ratur | rel. Luft-feuchte | Regen | Luftfeuchte | Regen | Feuchtefaktor $F_h$ (k) | IZ (x) Inkuba-tionszeit bei Temperatur x) | Temperatur-faktor $T_h$ (k) | Produkt von Faktor Feuchte Faktor Tempe-ratur | Tag | Tages-Infektionswert |
| (i) | (h) | °C | % | mm | | | | | | | TIW ($t_k$) | |
| | | | | | wenn rel. Lf.>90 dann 1, sonst 0 | wenn Regen $\geq$0,1 dann 1, sonst 0 | wenn rel. Lf. >90 oder Regen >0,1 dann 1, sonst 0 | | | | | |
| 1 | 1 | 8,1 | 99 | 0 | 1 | 0 | 1 | 57,56 | 0,12 | 0,12 | 1 | 0,06 |
| 1 | 2 | 7 | 99 | 0 | 1 | 0 | 1 | 81,30 | 0,09 | 0,09 | 2 | 0,09 |
| 1 | 3 | 5,7 | 99 | 0 | 1 | 0 | 1 | 124,11 | 0,06 | 0,06 | 3 | 0,02 |
| 1 | 4 | 5,6 | 99 | 0 | 1 | 0 | 1 | 128,28 | 0,06 | 0,06 | 4 | 0,03 |
| 1 | 5 | 4,8 | 99 | 0 | 1 | 0 | 1 | 167,47 | 0,04 | 0,04 | 5 | 0,18 |
| 1 | 6 | 6,8 | 95 | 0 | 1 | 0 | 1 | 86,69 | 0,08 | 0,08 | " | " |
| 1 | 7 | 9,6 | 80 | 0 | 0 | 0 | 0 | 36,91 | 0,19 | 0,00 | " | " |
| 1 | 8 | 11 | 74 | 0 | 0 | 0 | 0 | 25,32 | 0,28 | 0,00 | " | " |
| 1 | 9 | 12,4 | 72 | 0 | 0 | 0 | 0 | 18,22 | 0,39 | 0,00 | " | " |
| 1 | 10 | 13,3 | 68 | 0 | 0 | 0 | 0 | 15,19 | 0,47 | 0,00 | " | " |
| 1 | 11 | 12,7 | 70 | 0 | 0 | 0 | 0 | 17,11 | 0,42 | 0,00 | " | " |
| 1 | 12 | 13,7 | 64 | 0 | 0 | 0 | 0 | 14,12 | 0,51 | 0,00 | " | " |
| 1 | 13 | 13,6 | 63 | 0 | 0 | 0 | 0 | 14,38 | 0,50 | 0,00 | " | " |
| 1 | 14 | 14 | 62 | 0 | 0 | 0 | 0 | 13,41 | 0,53 | 0,00 | " | " |
| 1 | 15 | 13,8 | 66 | 0 | 0 | 0 | 0 | 13,88 | 0,51 | 0,00 | " | " |
| 1 | 16 | 12,3 | 75 | 0 | 0 | 0 | 0 | 18,62 | 0,38 | 0,00 | " | " |
| 1 | 17 | 10,8 | 86 | 0 | 0 | 0 | 0 | 26,65 | 0,27 | 0,00 | " | " |
| 1 | 18 | 11,8 | 81 | 0 | 0 | 0 | 0 | 20,85 | 0,34 | 0,00 | " | " |
| 1 | 19 | 10,1 | 92 | 0,3 | 1 | 1 | 1 | 32,11 | 0,22 | 0,22 | " | " |
| 1 | 20 | 9,9 | 97 | 0 | 1 | 0 | 1 | 33,93 | 0,21 | 0,21 | " | " |
| 1 | 21 | 8,6 | 99 | 0 | 1 | 0 | 1 | 49,44 | 0,14 | 0,14 | " | " |
| 1 | 22 | 9,1 | 98 | 0 | 1 | 0 | 1 | 42,63 | 0,17 | 0,17 | " | " |

EP 1 258 741 A2

EP 1 258 741 A2

| Termin | | Witterungsdaten | | | Infektionswahrscheinlichkeit Stunde (h) | | | | | | Infektionswahrschein-lichkeit Tag (k) | |
|---|---|---|---|---|---|---|---|---|---|---|---|---|
| Tag | Stunde | Tempe-ratur | rel. Luft-feuchte | Regen | Kalkulation Faktor Feuchte | | | Kalkulation Faktor Temperatur | | Infektionswahr-scheinlichkeit | Tag | Tages-Infektionswert |
| (i) | (h) | °C | % | mm | Luftfeuchte | Regen | Feuchtefaktor $F_h$ (k) | IZ (x) Inkuba-tionszeit bei Temperatur x) | Temperatur-faktor $T_h$ (k) | Produkt von Faktor Feuchte Faktor Tempe-ratur | TIW ($t_k$) | |
| | | | | | wenn rel. Lf.>90 dann 1, sonst 0 | wenn Regen $\geq$0,1 dann 1, sonst 0 | wenn rel. Lf. >90 oder Regen >0,1 dann 1, sonst 0 | | | | | |
| 1 | 23 | 9,3 | 98 | 0 | 1 | 0 | 1 | 40,22 | 0,18 | 0,18 | " | " |
| 1 | 24 | 8,4 | 99 | 0 | 1 | 0 | 1 | 52,52 | 0,14 | 0,14 | " | " |
| 2 | 1 | 7,6 | 99 | 0 | 1 | 0 | 1 | 67,23 | 0,11 | 0,11 | " | " |
| 2 | 2 | 7,2 | 99 | 0 | 1 | 0 | 1 | 76,28 | 0,09 | 0,09 | " | " |
| 2 | 3 | 7,3 | 99 | 0 | 1 | 0 | 1 | 73,89 | 0,10 | 0,10 | " | " |
| " | " | 7,5 | 99 | 0 | 1 | 0 | 1 | 69,37 | 0,10 | 0,10 | " | " |
| " | " | " | " | " | " | " | " | " | " | " | " | " |
| " | " | " | " | " | " | " | " | " | " | " | " | " |
| " | " | " | " | " | " | " | " | " | " | " | " | " |
| Epidemie-beginn n | 24 | 13,8 | 66 | 0 | 0 | 0 | 0 | 13,88 | 0,51 | 0,00 | Epidemie-beginn n | " |
| | | | | | | | | | | | Summe | 9,80 |

In der Tabelle 1 bedeuten:

$$F_h(k) = \begin{cases} 1 & \text{falls relative Luftfeuchtigkeit} >90\,\% \text{ oder} \\ & \text{Niederschlagsmenge} \geq 0{,}1 \text{ mm/h} \\ 0 & \text{sonst} \end{cases}$$

$$IZ(x) = 7 + 26 \cdot exp\,[0{,}35 \cdot (x - 10)]$$

$$TIW(t_k) = \frac{1}{24} \cdot \sum_{h=1}^{24} T_h(k) \cdot F_h(k)$$

| Prognose |
|---|
| Epidemiebeginn wenn Summe TIW > 7 |
| Summe TIW von Reihenschluss bis zum Epidemiebeginn |
| $kTIW = \sum\limits_{i=1}^{n} TIW\,(t_i)$ |
| 9,8 |

Wie sich aus den Daten ergibt, wird am $n$-ten Tag nach Messbeginn ein Schwellenwert von 9,8 erreicht. Das bedeutet, dass von diesem Zeitpunkt an eine Fungizidbehandlung notwendig ist, sofern ermittelt wird, dass wenigstens 5 von 100 Rübenblättern Pilzbefall zeigen.

**Patentansprüche**

1. Verfahren zum Bestimmen der Notwendigkeit von Fungizidbehandlungen bei Rübenpflanzen, **dadurch gekennzeichnet, dass** man

   A) in einem ersten Schritt vom Reihenschluss an die Temperatur, die relative Luftfeuchtigkeit und die tägliche Niederschlagsmenge im Anbaugebiet misst und daraus den kumulierten Tagesinfektionswert (*kTIW*) für einen ausgewählten Erreger von Pilzkrankheiten nach folgender Formel berechnet

$$kTIW = \sum_{i=1}^{n} TIW\,(t_i) \qquad \text{(Gl. 1)}$$

worin

$kTIW$:  kumulierter Tagesinfektionswert
$t_i$:  i-ter Tag der Messwert-Erfassung
$n$:  Zahl der hintereinander liegenden Tage der Messwert-Erfassung ab Reihenschluss
$TIW (t_i)$:  Tagesinfektionswert am Tag $t_i$

wobei sich der jeweilige Tagesinfektionswert *TIW* wiederum nach folgender Formel berechnet

$$TIW (t_k) = \frac{1}{24} \cdot \sum_{h=1}^{24} T_h (k) \cdot F_h (k) \qquad (Gl.\ 2)$$

worin

$h$:  Zeit in Stunden
$T_h (k)$:  Temperaturfaktor in der h-ten Stunde am k-ten Tag
$F_h (k)$:  Feuchtigkeitsfaktor in der h-ten Stunde am k-ten Tag
$t_k$:  k-ter Tag der Meßwerterfassung

wobei sich der Temperaturfaktor $T_h$ (k) nach folgender Forme berechnet

$$T_h (k) = \frac{IZ\ opt}{IZ\ (x\ (h))} \qquad (GL.3)$$

worin

$IZ_{opt}$:  Inkubationszeit (IZ) bei optimaler Temperatur in Tagen
$IZ_x$:  Inkubationszeit (IZ) bei Temperatur x in Tagen
$x(h)$:  Temperatur zur Stunde h

und

$$F_h (k) = \begin{cases} 1 & \text{falls relative Luftfeuchtigkeit} >90\ \%\ \text{oder} \\ & \text{Niederschlagsmenge} \geq 0,1\ \text{mm/h} \\ 0 & \text{sonst} \end{cases}$$

und wobei sich *IZ* aus folgender Formel ergibt

$$IZ\ (x) = IZ_{opt} + a \cdot exp\ [b \cdot (x - c)] \qquad (GL.4)$$

worin

$IZ_{opt}$:  Inkubationszeit bei optimaler Temperatur in Tagen
$x$:  Temperatur in °C
$a, b, c$:  Faktoren

und
B) in einem zweiten Schritt, wenn *kTIW* einen für den Erreger und die Rübenpflanzen charakteristischen Wert erreicht oder überschritten hat, den tatsächlichen Befall mit dem Erreger bestimmt, indem man wöchentlich jeweils 100 Blätter der Pflanzen nach Infektionshinweisen untersucht,
und
C) in einem dritten Schritt ermittelt, wann wenigstens 5 von 100 Blättern infiziert sind.